# EUROPEAN PATENT SPECIFICATION

(11) **EP 2 703 782 B1**
(45) Date of publication and mention of the grant of the patent: **12.02.2020**
(21) Application number: 13181836.1
(22) Date of filing: 27.08.2013
(51) Int. Cl.: G01C 23/00, G08G 5/00, H04L 29/08, H04W 4/00, H04W 4/02, B64D 43/00

(54) **Aircraft system and method for exchanging data**
Flugzeugsystem und Verfahren zum Datenaustausch
Système d'aéronef et procédé d'échange de données

(30) Priority: 28.08.2012 US 201213596642
(43) Date of publication of application: 05.03.2014
(60) Divisional application: 19182783.1
(73) Proprietor: GE Aviation Systems LLC, Grand Rapids, MI 49512-1991 (US)
(72) Inventor: Ovens, Norman Leonard, Grand Rapids, MI Michigan 49512 (US)
(74) Representative: Openshaw & Co.

(56) References cited:
- US-A1- 2005 015 618
- US-A1- 2008 154 446
- US-A1- 2010 105 329
- US-B1- 7 903 594

## Description

### BACKGROUND

Contemporary aircraft include systems that typically need to exchange data between the systems on the aircraft and operators located on the ground for maintenance, operational, and other purposes. WiFi and datalink services are currently used to exchange such data. These services are useful in that they provide for communication over a relatively great distance, from an airport-wide perspective. However, this benefit is also a detriment in that the communications may be more easily intercepted, which may not always be desirable, regardless of whether the data is encrypted or not. Moreover, these communication services require relatively-heavy, dedicated hardware be installed on the aircraft. As both WiFi and datalink services require equipment and/or antennas to be located in the aircraft these services lead to additional weight and an increase in the cost of operation.

US patent application US7903594 is further prior-art.

### BRIEF DESCRIPTION

The invention is defined by the appended set of claims. In the following description, anything referred to as an embodiment which falls outside the scope of the appended set of claims is to be understood as an example useful for understanding the invention.

### BRIEF DESCRIPTION OF THE DRAWINGS

In the drawings:
Figure 1 is a schematic illustration of an aircraft according to one embodiment of the invention;
Figure 2 is a perspective view of a portion of the cockpit better illustrating a flight deck of the aircraft of Figure 1;
Figure 3 is an enlarged view of a portion of the flight deck and a handheld device of the aircraft system according to an embodiment of the invention; and
Figure 4 is a schematic view illustrating a computer that may be included in the aircraft system according to a second embodiment of the invention.

### DETAILED DESCRIPTION

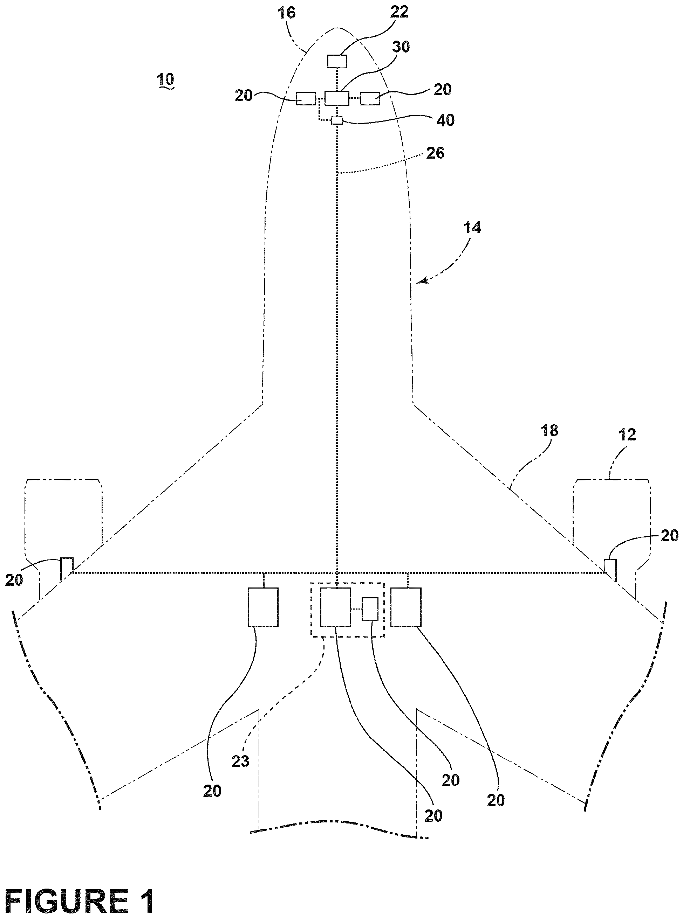

Figure 1 schematically illustrates an aircraft 10 for securely transferring information according to embodiments of the invention. One or more propulsion engines 12 may be coupled to a fuselage 14, a cockpit 16 may be positioned in the fuselage 14, and wing assemblies 18 may extend outward from the fuselage 14. A plurality of aircraft systems 20 that enable proper operation of the aircraft 10 may be included as well as a flight control computer or computer 22. While a commercial aircraft has been illustrated, it is contemplated that embodiments of the invention may be used in any type of legacy aircraft, for example, without limitation, fixed-wing, rotating-wing, rocket, personal aircraft, and military aircraft.

The plurality of aircraft systems 20 may reside within the cockpit 16, within the electronics and equipment bay 23, or in other locations throughout the aircraft 10 including that they may be associated with the engines 12. Such aircraft systems 20 may include but are not limited to: an electrical system, an oxygen system, hydraulics and/or pneumatics system, a fuel system, a propulsion system, navigation systems, flight controls, audio/video systems, an Integrated Vehicle Health Management (IVHM) system, and systems associated with the mechanical structure of the aircraft 10. A variety of aircraft systems 20 have been illustrated for exemplary purposes and it will be understood that they are only a few of the systems that may be included in the aircraft 10.

A data network 26 over which the plurality of aircraft systems 20 may communicate with each other and provide information to a crew of the aircraft 10 may be included. For example, the aircraft systems 20 may output various information to a flight deck 30 located in a cockpit 16 of the aircraft 10.

A first near-field communication interface 40 may be located within the aircraft 10 and operably coupled to at least some of the plurality of aircraft systems 20. The first near-field communication interface 40 has been illustrated as being included in the cockpit 16 for illustrative purposes. It is contemplated that the first near-field communication interface 40 may be located in other locations within the aircraft 10 including within the electronics and equipment bay 23. Although only one first near-field communication interface 40 has been illustrated, it is contemplated that the aircraft 10 may have multiple near-field communication interfaces.

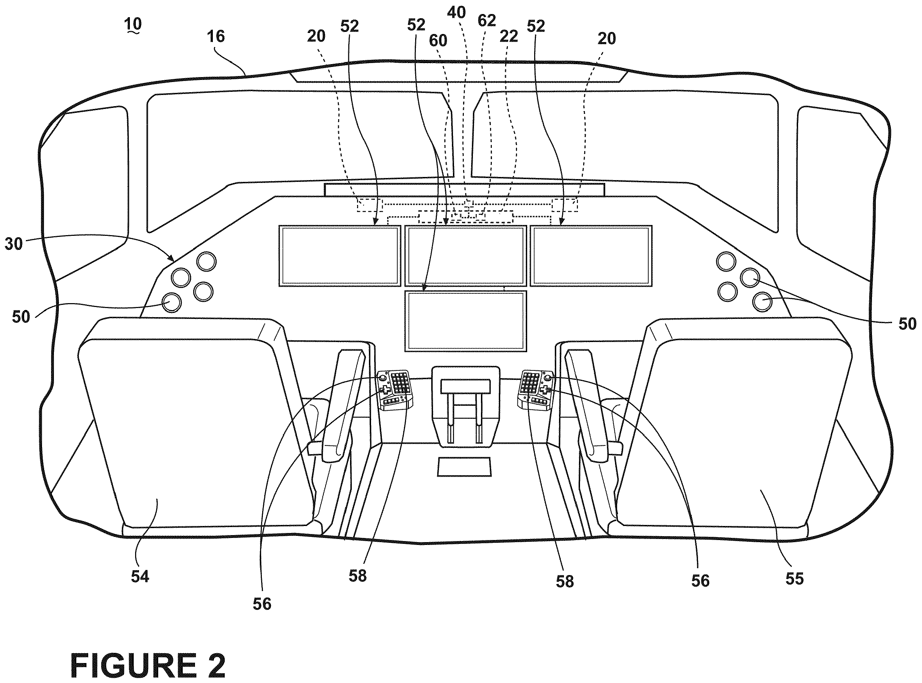

Figure 2 illustrates a portion of the cockpit 16 of the aircraft 10 and an exemplary flight deck 30 having various instruments 50 and flight displays 52. A first user (e.g., a pilot) may be present in a seat 54 at the left side of the cockpit 16 and another user (e.g., a co-pilot) may be present at the right side of the cockpit 16 in a seat 55 and the flight deck 30 may be located in front of the pilot and co-pilot and may provide the flight crew with information to aid in operating the aircraft 10. The flight displays 52 may include either primary flight displays or multi-function displays and may display a wide range of aircraft, flight, navigation, and other information used in the operation and control of the aircraft 10. Further, both the various instruments 50 and flight displays 52 of the flight deck 30 may provide one or more visual indicia indicative of a corresponding health condition of one or more of the aircraft systems 20.

The instruments 50 and flight displays 52 may be laid out in any manner including having fewer or more instruments or displays. Further, the flight displays 52 need not be coplanar and need not be the same size. A touch screen display or touch screen surface may be included in the flight display 52 and may be used by one or more flight crew members, including the pilot and co-pilot, to interact with the systems of the aircraft 10. Such touch screen surface may take any suitable form including that of a liquid crystal display (LCD) and may use various physical or electrical attributes to sense inputs from the flight crew. It is contemplated that the flight display 52 may be dynamic and that one or more cursor control devices 56 and/or one or more multifunction keyboards 58 may be included in the cockpit 16 and may be used by one or more flight crew members to interact with the systems of the aircraft 10. In this manner, the flight deck 30 may be considered a user interface for the aircraft systems 20 and the aircraft 10.

The computer 22 may be operably coupled to components of the aircraft 10 including the aircraft systems 20, instruments 50, flight displays 52, touch screen surfaces, cursor control devices 56, keyboards 58, etc. The computer 22 may receive inputs from any number of aircraft systems 20 or software programs responsible for managing the acquisition and storage of data. The computer 22 may also be connected with other controllers of the aircraft 10. The computer 22 may include memory 60 and processing units 62, which may be running any suitable programs to implement a graphical user interface (GUI) and operating system. The flight control computer 22 may include or be associated with, any suitable number of individual microprocessors, power supplies, storage devices, interface cards, auto flight systems, flight management computers, and other standard components. The flight control computer 22 may include or cooperate with any number of software programs (e.g., flight management programs) or instructions designed to carry out the various methods, process tasks, calculations, and control/display functions necessary for operation of the aircraft 10.

The first near-field communication interface 40 may be communicably coupled to the computer 22 or other processors of the aircraft 10 as well as any number of the plurality of aircraft systems 20 to transfer information on and off the aircraft 10. The first near-field communication interface 40 may include a near-field communication mechanism capable of wirelessly linking with other near-field enabled systems and devices.

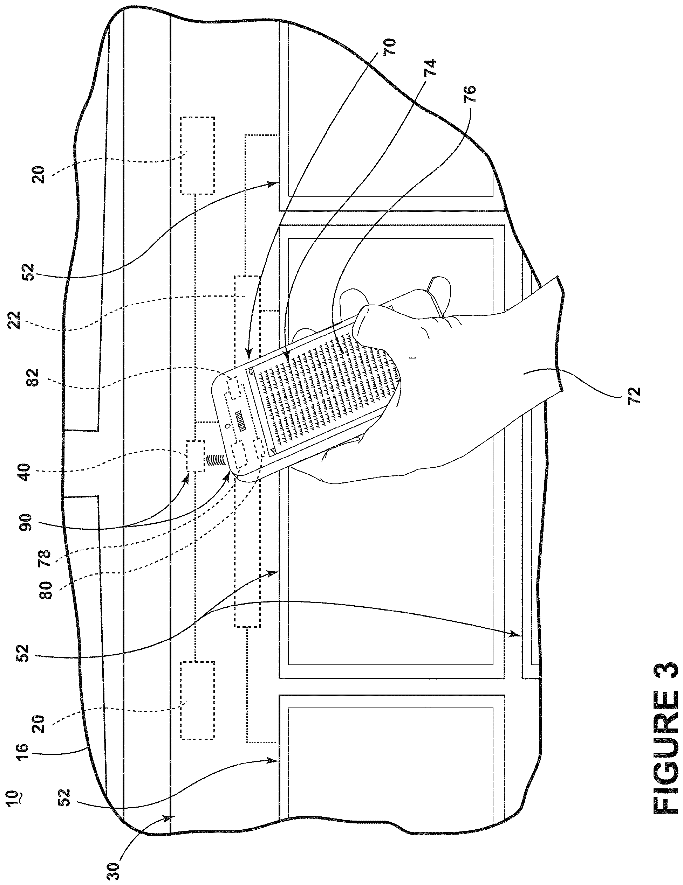

For example, as illustrated in Figure 3 a handheld device 70 with a compatible near-field communication interface may be provided to communicate with the first near-field communication interface 40, and, thus, the aircraft systems 20. More specifically, a second near-field communication interface 78 has been illustrated as being included in the handheld device 70. The handheld device 70 may be operated by a user 72 such that the handheld device 70 may be capable of interfacing with the aircraft 10 through the first near-field communication interface 40.

A display 74 may also be included in the handheld device 70. It is contemplated that the display 74 may be a touch screen 76 such that the user 72 may interact with the display 74 through the touch screen 76. While the handheld device 70 has been illustrated as a phone having a touch screen 76 it will be understood that the handheld device may be a scanner, PDA, tablet PC or other suitable device. A keyboard or cursor control may also be provided in the handheld device 70 to allow for user interaction with the display 74.

In order to be capable of wirelessly linking with other systems and devices, the handheld device 70 may also include any suitable wireless communication link 80, which may include, but is not limited to, packet radio, satellite uplink, Wireless Fidelity (WiFi), WiMax, AeroMACS, Bluetooth, ZigBee, 3G wireless signal, code division multiple access (CDMA) wireless signal, global system for mobile communication (GSM), 4G wireless signal, long term evolution (LTE) signal, Ethernet, or any combinations thereof. It will also be understood that the particular type or mode of wireless communication is not critical to this invention, and later-developed wireless networks are certainly contemplated as within the scope of this invention.

A controller 82 may be included in the handheld device 70 and may be operably coupled to components of the handheld device 70 including the display 74, touch screen 76, second near-field communication interface 78, and wireless communication link 80. The controller 82 may include any suitable memory and processing units, which may be running any suitable programs to implement a graphical user interface (GUI) and operating system.

One of the first near-field communication interface 40 and the handheld device 70 may include all or a portion of a computer program having an executable instruction set for exchanging information when the handheld device 70 is placed within close proximity of the first near-field communication interface 40. Regardless of whether the first near-field communication interface 40 or the handheld device 70 runs the program for exchanging the information, the program may include a computer program product that may include machine-readable media for carrying or having machine-executable instructions or data structures stored thereon. Such machine-readable media may be any available media, which can be accessed by a general purpose or special purpose computer or other machine with a processor. Generally, such a computer program may include routines, programs, objects, components, data structures, algorithms, etc. that have the technical effect of performing particular tasks or implement particular abstract data types. Machine-executable instructions, associated data structures, and programs represent examples of program code for executing the exchange of information as disclosed herein. Machine-executable instructions may include, for example, instructions and data, which cause a general purpose computer, special purpose computer, or special purpose processing machine to perform a certain function or group of functions.

Thus, it is contemplated that the handheld device 70 and the aircraft 10 may be in data communication. More specifically, when the handheld device 70 is brought within close proximity to the first near-field communication interface 40, the first near-field communication interface 40 and the second near-field communication interface 78 may communicate. The first near-field communication interface 40 and the handheld device 70 form an aircraft system 90 for exchanging data between the aircraft and the user 72 operating the handheld device 70. The aircraft system 90 requires close proximity to the first near-field communication interface 40. It is contemplated that the close proximity may be less than 25 cm. By way of a further example, the close proximity may be between 4 cm and 20 cm. Such a close proximity makes the aircraft system 90 less susceptible to eavesdropping.

The aircraft system 90 takes advantage of mobile near-field communications peer-to-peer communication and enables information to be exchanged through the first near-field communication interface 40 and the second near-field communication interface 78 for at least some of the multiple aircraft systems 20 and the handheld device 70. The information exchange may support 400-800 kilobits per second full-duplex communication. The aircraft system 90 may be used for a variety of functions including that the handheld device 70 may interact with the aircraft 10 and may interact with aircraft systems 20 to communicate various information between them. The technical effect is that the aircraft system 90 may provide secure access between at least some of the multiple aircraft systems 20 and the handheld device 70. Among other information the information exchanged may include at least one of flight plan information, flight data, weight and balance information, software update information, operation information, authorization code information, system configurations, and maintenance information. The interface will typically be able to support 400-800 kilobits per second full-duplex communication, between the mobile device and the aircraft. The data rate between the remote operator and the mobile device will vary based on commercial network provisions.

It is contemplated that when the first near-field communication interface 40 and the second near-field communication interface 78 communicate that the communication is secure. The communication may be considered secure because it utilizes the transfer of authorization codes before information may be exchanged between the first near-field communication interface 40 and the handheld device 70. For example, the computer program on one of the first near-field communication interface 40 and the handheld device 70 may use higher-level cryptographic protocols to establish secure communication channels. Further, it is contemplated that the one or more cursor control devices 56 and/or one or more multifunction keyboards 58 may be used to input an authorization code to establish the secure communication.

During operation, when the handheld device 70 is brought within close proximity to the first near-field communication interface 40 the first and second near-field communication interfaces 40 and 78 may communicate. Through the first and second near-field communication interfaces 40 and 78, the handheld device 70 may exchange information with the computer 22 and/or the aircraft systems 20.

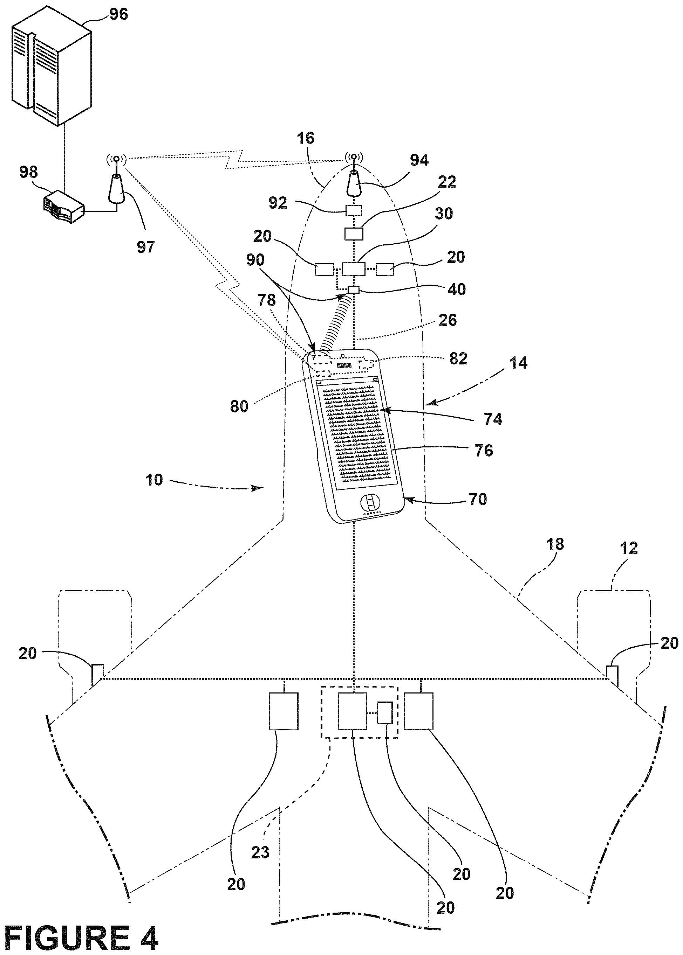

The interface between the first near-field communication interface 40 and the handheld device 70 may be monitored to ensure that the communication is secure. Referring now to Figure 4, an embodiment of the aircraft system 90 is illustrated where a surveillance system 92 for surveying the first near-field communication interface 40 is included. The surveillance system 92 may be used to monitor who is using the handheld device 70. The surveillance system 92 may include any suitable type of surveillance system. For example, the surveillance system 92 may include a camera, such as a video camera or a still camera, which may record an image of the person accessing the first near-field communication interface 40. It is contemplated that the monitoring may be passive or active monitoring. By way of non-limiting example, the monitoring could include having a camera record the area where a user would be to communicate with the first near-field communication interface 40 and reviewing the recording in the even that something is amiss. By way of further non-limiting example, the surveillance system 92 may also include a camera outputting a signal that may be monitored remotely from the first near-field communication interface 40. In order for the surveillance system 92 to be capable of being monitored remotely, including off the aircraft 10, it is contemplated that a wireless communication link 94 capable of wirelessly linking with other systems may be included in the aircraft 10. The wireless communication link 94 may include any suitable wireless communication link 94.

The aircraft system 90 may also include a computer 96, other than the handheld device 70 and that is remote from the handheld device 70 and in communication with the handheld device 70. It is contemplated that the computer 96 may be remote from the handheld device 70 and the aircraft 10. For example, the computer 96 may be located at airline central maintenance or airline control. The computer 96 may be in communication with the handheld device 70 and/or the aircraft 10. The computer 96 may include any suitable wireless communication link 97 capable of wirelessly linking with other systems and devices. The computer 96 may be directly coupled with the wireless communication link 97 or may be indirectly coupled to the wireless communication link 97 through a secondary communication link 98, which may include an internet connection to couple the computer 96 to the wireless communication link 97.

It is contemplated that the wireless communication link 80 of the handheld device 70 may include a secure wireless communication system that may be in communication with a secure wireless communication system of the computer 96 to establish a secure communication. In this manner, the handheld device 70 may securely wirelessly communicate with systems off the aircraft 10 such as airline central maintenance or airline control. The secure communication between the computer 96 and the handheld device 70 may be performed after one of the computer 96 and the handheld device 70 recognizes the other of the computer 96 and the handheld device 70.

During operation, the above described aircraft system 90 may be configured to securely transfer information between the first near-field communication interface 40 located within the aircraft 10 and the handheld device 70. This may be done in any suitable manner. By way of non-limiting example, the handheld device 70 may send an authorization code to the computer 22 or the first near-field communication interface 40 of the aircraft 10, which may then grant permission before an interface occurs. The sending of the authorization code may be monitored with the surveillance system 92. Access may be confirmed based on the monitoring and once access is confirmed, information may be transmitted between the first near-field communication interface 40 and the handheld device 70. The monitoring may be done from a location that is remote from the first near-field communication interface 40. By way of non-limiting example, the monitoring may be done at a location such as at the airline operations center. Alternatively, if the first near-field communication interface 40 is located in the electronics and equipment bay 23, the monitoring may be done from the cockpit 16.

It is contemplated that once information is transferred to the handheld device 70 that such information may be securely communicated to the computer 96. The handheld device 70 may execute a program for transmitting data from the handheld device 70 to the computer 96. It is contemplated that such a process may be user initiated or may be implemented automatically by the handheld device 70. In the case where the transmission of flight data is user initiated, the flight crew may manually initiate the transmission of the data through the touch screen 76. This may allow the information to be transferred to the computer 96 and a remote dispatcher at such computer 96.

The embodiments described above provide a variety of benefits including that they provide a means to interact between systems in the aircraft and the handheld device using near-field communications. Such an interaction is a secure, local transaction that provides a flexible connection to aircraft, allowing communication with the aircraft utilizing the convenience of small, low cost consumer device. The above embodiments do not require high infrastructure and installation costs and minimize the cost of software and hardware development for onboard equipment. The above embodiments have a low cost and a low installation cost footprint in the aircraft as portions of the aircraft system may be integrated into many different pieces of equipment already found in the aircraft. Furthermore, such handheld devices are widely available and do not have to remain in the aircraft, which reduces the weight within the aircraft during flight. Further, embodiments of the invention may provide a secure path between the aircraft and the ground systems and have a low range and are less susceptible to eavesdropping.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An aircraft system (90) for exchanging data between an aircraft having multiple aircraft systems (20) and an operator (72), the aircraft system comprising:
a first near-field communication interface (40) located within the aircraft (10) and operably coupled to at least some of the multiple aircraft systems (20); and
a handheld device (70) having a second near-field communication interface (78);
wherein the handheld device (70) is required to be brought within 25cm of the first near field communication interface for the first and second near-field communication interfaces to communicate;
wherein when the handheld device (70) is brought within 25cm of the first near field communication interface such that the first and second near-field communication interfaces may communicate, information may be exchanged through the near-field communication interfaces for at least some of the multiple aircraft systems and the handheld device.

2. The aircraft system (90) of claim 1, wherein the first near-field communication interface (40) is located within a cockpit (16) of the aircraft (10).

3. The aircraft system (90) of either of claim 1 or 2, wherein one of the first near-field communication interface (40) and the handheld device (70) comprises a computer program having an executable instruction set for exchanging information when the handheld device is placed within the required 25 cm of the first near-field communication interface.

4. The aircraft system (90) of any preceding claim, wherein the information exchanged comprises at least one of flight plan information, flight data, weight and balance information, software update information, operation information, authorization code information, and maintenance information.

5. The aircraft system of (90) any preceding claim, wherein the information exchange supports 400-800 kilobits per second full-duplex communication.

6. The aircraft system (90) of any preceding claim, further comprising a computer (96), other than the handheld device (70), remote from the handheld device and in communication with the handheld device.

7. The aircraft system (90) of claim 6, wherein the handheld device (70) comprises a secure wireless communication system in communication with a secure wireless communication system of the computer (96) to establish a secure communication.

8. The aircraft system (90) of either of claim 6 or 7, wherein secure communication between the computer and the handheld device (70) is performed after one of the computer (96) and the handheld device recognizes the other of the computer and the handheld device.

9. The aircraft system of any preceding claim, wherein when the first and second near-field communication interfaces (40,78) communicate the communication is secure.

10. The aircraft system of claim 9, wherein the secure communication utilizes a transfer of authorization codes before information may be exchanged between the near-field communication interface and the handheld device (70).

11. The aircraft system of any preceding claim, further comprising a surveillance system (92) for surveying the first near-field communication interface to monitor who is using the handheld device (70), wherein preferably the surveillance system (92) comprises a camera outputting a signal that may be monitored remotely from the first near-field communication interface (40).

## Patentansprüche

1. Luftfahrzeugsystem (90) zum Austauschen von Daten zwischen einem Luftfahrzeug, welches mehrere Luftfahrzeugsysteme (20) aufweist, und einem Bediener (72), wobei das Luftfahrzeugsystem Folgendes umfasst:
eine erste Nahfeldkommunikationsschnittstelle (40), welche innerhalb des Luftfahrzeugs (10) angeordnet ist und welche betriebsmäßig mit mindestens einigen der mehreren Luftfahrzeugsysteme (20) gekoppelt ist; und
eine tragbare Vorrichtung (70), welche eine zweite Nahfeldkommunikationsschnittstelle (78) aufweist;
wobei die tragbare Vorrichtung (70) in einen Abstand von nicht mehr als 25 cm von der ersten Nahfeldkommunikationsschnittstelle zu bringen ist, damit die erste und die zweite Nahfeldkommunikationsschnittstelle miteinander kommunizieren können;
wobei, wenn die tragbare Vorrichtung (70) in einen Abstand von nicht mehr als 25 cm von der ersten Nahfeldkommunikationsschnittstelle gebracht wird, sodass die erste und die zweite Nahfeldkommunikationsschnittstelle miteinander kommunizieren können, Informationen durch die Nahfeldkommunikationsschnittstellen für mindestens einige der mehreren Luftfahrzeugsysteme und der tragbaren Vorrichtung ausgetauscht werden können.

2. Luftfahrzeugsystem (90) nach Anspruch 1, wobei die Nahfeldkommunikationsschnittstelle (40) innerhalb eines Cockpits (16) des Luftfahrzeugs (10) angeordnet ist.

3. Luftfahrzeugsystem (90) nach Anspruch 1 oder 2, wobei eine von der ersten Nahfeldkommunikationsschnittstelle (40) und der tragbaren Vorrichtung (70) ein Computerprogramm umfasst, welches einen Satz von ausführbaren Anweisungen umfasst, um Informationen auszutauschen, wenn die tragbare Vorrichtung in den geforderten Abstand von nicht mehr als 25 cm von der ersten Nahfeldkommunikationsschnittstelle gebracht wird.

4. Luftfahrzeugsystem (90) nach einem der vorhergehenden Ansprüche, wobei die ausgetauschten Informationen mindestens Flugplaninformationen, Flugdaten, Gewichts- und Gleichgewichtsinformationen, Softwareaktualisierungsinformationen, Betriebsinformationen, Autorisierungscodeinformationen oder Wartungsinformationen umfassen.

5. Luftfahrzeugsystem (90) nach einem der vorhergehenden Ansprüche, wobei der Informationsaustausch eine Vollduplex-Kommunikation bei 400-800 kbit/s unterstützt.

6. Luftfahrzeugsystem (90) nach einem der vorhergehenden Ansprüche, ferner umfassend einen Computer (96), welcher nicht die tragbare Vorrichtung (70) ist, und welcher von der tragbaren Vorrichtung entfernt ist und mit der tragbaren Vorrichtung kommuniziert.

7. Luftfahrzeugsystem (90) nach Anspruch 6, wobei die tragbare Vorrichtung (70) ein sicheres drahtloses Kommunikationssystem umfasst, welches mit einem sicheren drahtlosen Kommunikationssystem des Computers (96) kommuniziert, um eine sichere Kommunikation aufzubauen.

8. Luftfahrzeugsystem (90) nach Anspruch 6 oder 7, wobei die sichere Kommunikation zwischen dem Computer und der tragbaren Vorrichtung (70) ausgeführt wird, nachdem der Computer (96) die tragbare Vorrichtung oder die tragbare Vorrichtung den Computer erkannt hat.

9. Luftfahrzeugsystem nach einem der vorhergehenden Ansprüche, wobei, wenn die erste und die zweite Nahfeldkommunikationsschnittstelle (40, 78) kommunizieren, die Kommunikation sicher ist.

10. Luftfahrzeugsystem nach Anspruch 9, wobei die sichere Kommunikation eine Übertragung von Autorisierungscodes verwendet, bevor die Informationen zwischen der Nahfeldkommunikationsschnittstelle und der tragbaren Vorrichtung (70) ausgetauscht werden können.

11. Luftfahrzeugsystem nach einem der vorhergehenden Ansprüche, ferner umfassend ein Überwachungssystem (92) zum Überwachen der ersten Nahfeldkommunikationsschnittstelle, um den Benutzer der tragbaren Vorrichtung (70) zu überwachen, wobei das Überwachungssystem (92) vorzugsweise eine Kamera umfasst, welche ein Signal ausgibt, welches von der ersten Nahfeldkommunikationsschnittstelle (40) fernüberwachbar ist.

## Revendications

1. Système d'aéronef (90) pour échanger des données entre un aéronef ayant de multiples systèmes d'aéronef (20) et un opérateur (72), le système d'aéronef comprenant :
une première interface de communication en champ proche (40) située à l'intérieur de l'aéronef (10) et fonctionnellement couplée à au moins certains des multiples systèmes d'aéronef (20) ; et
un dispositif portatif (70) ayant une seconde interface de communication en champ proche (78) ;
dans lequel le dispositif portatif (70) doit être amené à 25 cm de la première interface de communication en champ proche pour que la première et la seconde interface de communication en champ proche communiquent ;
dans lequel lorsque le dispositif portatif (70) est amené à 25 cm de la première interface de communication en champ proche, de sorte que la première et la seconde interfaces de communication en champ proche peuvent communiquer, des informations peuvent être échangées par l'intermédiaire des interfaces de communication en champ proche pour au moins certains des multiples systèmes d'aéronef et le dispositif portatif.

2. Système d'aéronef (90) selon la revendication 1, dans lequel la première interface de communication en champ proche (40) est située à l'intérieur d'un poste de pilotage (16) de l'aéronef (10).

3. Système d'aéronef (90) selon l'une ou l'autre des revendications 1 ou 2, dans lequel l'interface de communication en champ proche (40) ou le dispositif portatif (70) comprend un programme informatique ayant un ensemble d'instructions exécutables pour échanger des informations lorsque le dispositif portatif est placé dans les 25 cm requis de la première interface de communication en champ proche.

4. Système d'aéronef (90) selon l'une quelconque des revendications précédentes, dans lequel les informations échangées comprennent des informations de plan de vol et/ou des données de vol et/ou des informations de poids et d'équilibre et/ou des informations de mise à jour de logiciel et/ou des informations de fonctionnement et/ou des informations de code d'autorisation et/ou des informations de maintenance.

5. Système d'aéronef (90) selon l'une quelconque des revendications précédentes, dans lequel l'échange d'informations prend en charge 400 à 800 kilobits par seconde de communication en duplex intégral.

6. Système d'aéronef (90) selon n'importe quelle revendication précédente, comprenant en outre, un ordinateur (96), autre que le dispositif portatif (70), distant du dispositif portatif et en communication avec le dispositif portatif.

7. Système d'aéronef (90) selon la revendication 6, dans lequel le dispositif portatif (70), comprend un système de communication sans fil sécurisé en communication avec un système de communication sans fil sécurisé de l'ordinateur (96) pour établir une communication sécurisée.

8. Système d'aéronef (90) selon l'une ou l'autre des revendications 6 ou 7, dans lequel une communication sécurisée entre l'ordinateur et le dispositif portatif (70) est effectuée après que l'ordinateur (96) ou le dispositif portatif reconnaît l'autre parmi l'ordinateur et le dispositif portatif.

9. Système d'aéronef selon l'une quelconque des revendications précédentes, dans lequel lorsque les première et seconde interfaces de communication en champ proche (40, 78) communiquent, la communication est sécurisée.

10. Système d'aéronef selon la revendication 9, dans lequel la communication sécurisée utilise un transfert de codes d'autorisation avant que des informations puissent être échangées entre l'interface de communication en champ proche et le dispositif portatif (70).

11. Système d'aéronef selon l'une quelconque des revendications précédentes, comprenant en outre un système de surveillance (92) pour surveiller la première interface de communication en champ proche afin de suivre qui utilise le dispositif portatif (70), dans lequel de préférence le système de surveillance (92) comprend une caméra émettant un signal qui peut être suivi à distance de la première interface de communication en champ proche (40).
